(19) Europäisches Patentamt
European Patent Office
Office européen des brevets

(11) **EP 2 891 671 A1**

(12) **EUROPÄISCHE PATENTANMELDUNG**

(43) Veröffentlichungstag:
**08.07.2015   Patentblatt 2015/28**

(21) Anmeldenummer: **14075084.5**

(22) Anmeldetag: **22.12.2014**

(51) Int Cl.:
**C08G 18/48** (2006.01)      **C08G 18/66** (2006.01)
**C08G 18/72** (2006.01)      **C08G 18/79** (2006.01)
**C08G 18/24** (2006.01)      **C08G 18/32** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.12.2013   DE 102013022173**

(71) Anmelder: **GT Elektrotechnische Produkte GmbH 79761 Waldshut-Tiengen (DE)**

(72) Erfinder: **Paulmann, Uwe 79790 Küssaberg (DE)**

(74) Vertreter: **Gulde, Klaus W. Lange Straße 26 DE-15366 Neuenhagen bei Berlin (DE)**

(54) **Polyurethan-Elastomere auf der Basis von Polyetheralkoholgemischen und trimerisierten Diisocyanaten**

(57)   Die Erfindung betrifft Polyurethan-Elastomere auf der Basis von Polyetheralkoholgemischen und trimerisierten Diisocyanaten und ein Verfahren zu ihrer Herstellung. Sie werden vorzugsweise als Dichtungsmaterialien im Gießverfahren oder als vorgefertigte Dichtungen verwendet.

Der Erfindung liegt die Aufgabe zugrunde, Polyurethan-Elastomere auf der Basis von Polyetheralkoholgemischen und trimerisierten Diisocyanaten mit niedriger, einstellbarer Härte zur Verfügung zu stellen, die im Wesentlichen amorph, lichtstabil, optisch klar und wasserresistent sind und zusätzlich einen inhärenten Flammschutz und sehr hohe elektrische Isolationswerte aufweisen.

Die Lösung der Aufgabe erfolgt mit Polyurethan-Elastomere auf der Basis von Polyetheralkoholgemischen (A) und trimerisierten Diisocyanaten (B), herstellbar durch Umsetzung von
- (A1) einem Gemisch aus di- und trifunktionellen Polyetheralkoholen der Hydroxylfunktionalität 2 bis 3 und Äquivalentgewichten von 500 bis 6000, und
- (A2) einem oder mehreren hydroxylfunktionellen Kettenverlängerer der Funktionalität 2 mit einer Molmasse von 62 bis 260 und mindestens einer Verzweigung mit 1 bis 18 C-Atomen im Molekül,
mit
- (B) einem oder mehreren symmetrisch oder asymmetrisch trimerisierten aliphatischen und/oder cycloaliphatischen Diisocyanaten,
wobei der Isocyanat-Index zwischen 50 und 125 liegt, in Gegenwart von
- (A3) einem oder mehreren metallorganischen Katalysatoren, die an nanoskalige Metalloxide oder Metallhydroxide oder Metalloxidhydroxide der 2. bis 4. Hauptgruppe und der 4. Nebengruppe des Periodensystems der Elemente adsorbiert sind, und einem Verfahren zur ihrer Herstellung.

In einer weiteren vorteilhaften Ausgestaltung der Erfindung werden Zusatzstoffe (A4) wie Öle, Siliconöle, Siloxanfluide, Pigmente, Farbstoffe, Flammschutzmittel, Graphen, Polyhedral oligomeric silsesquioxane (POSS), Doppelschicht-Metallhydroxide, nanoskaliges flächiges Graphit, Siliciumnitrid, Bornitrid eingesetzt, um die Eigenschaften des Materials für verschiedene Anwendungen möglich zu machen bzw. zusätzlich zu verbessern.

EP 2 891 671 A1

**Beschreibung**

Diese Erfindung betrifft Polyurethan-Elastomere auf der Basis von Polyetheralkoholgemischen und trimerisierten Diisocyanaten und ein Verfahren zu ihrer Herstellung. Sie werden vorzugsweise als Dichtungsmaterialien im Gießverfahren oder als vorgefertigte Dichtungen verwendet.

Polyurethan-Elastomere sind bekannt. UV-stabile Polyurethan-Elastomere auf der Basis von Polybutadien-diolen und aliphatischen bzw. cycloaliphatischen Diisocyanaten werden z. B. in der US 6,780,957 beschrieben. Nach dieser werden isocyanat-terminierte Prepolymere aus OH-terminierten Polybutadienen und aliphatischen bzw. cycloaliphatischen Diisocyanaten mit einem NCO-Gehalt von 4 bis 12 Gew.-% NCO mit einem Diol-Kettenverlängerer in Gegenwart von Phosphinkatalysatoren umgesetzt und durch Härtung bei 110°C in 18 Stunden zu optisch klaren, zähen und elastischen Produkten umgesetzt. Die Härte beträgt 85 bis 87 Shore A, die Zugfestigkeit ca. 15 MPa. Die Bruchdehnung 290 bis 485 %.

Weiterhin werden solche Elastomere in der US 6,562,932 beschrieben. Nach dieser werden optisch klare, lichtstabile Poly(urethan-harnstoff)-Elastomere mit einem Erweichungsbeginn von wenigstens 130°C bei einem Isocyanat-Index von 95 bis 120 aus einem Isocyanat oder Prepolymer mit einem NCO-Gehalt von 5 bis 50 Gew.-% NCO und einer mittleren Funktionalität von 2 bis 3 und einem isocyanatreaktiven Stoff in Gegenwart von mindestens einem metallorganischen Katalysator hergestellt. Diese Elastomere können eine Shore A-Härte von 78 bis 98 aufweisen. Weiterhin werden in der US 6,242,555 [2-26; 14-26, 20-5] lichtstabile elastomere Polyurethan-Formkörper beschrieben, die aus Polyetherpolyolen einer Funktionalität 2 bis 4 und Äquivalentgewichten von 800 bis 4000, Kettenverlängerern, aminischen und metallorganischen Katalysatoren sowie Gemischen aus monomerem und trimerisiertem Isophorondiiosocyanat (IPDI), einer Pigment-Komponente und einem Antioxidant/UV-Absorber hergestellt werden.

In der US 3,945,981 werden UV-stabile Polyurethan-Elastomere auf der Basis aliphatischer Diisocyanate mit Zinn-Schwefel-Verbindungen als wärmeaktivierbarem Katalysator beschrieben. Polyurethan-Gelpolster niedriger Härte werden in der DE 31 03 564 beschrieben. Danach besteht das Gel aus

(1) 15-62 Gew.-%, bevorzugt 20 - 57 Gew.-%, besonders bevorzugt 25 - 47 Gew.-%, bezogen auf die Summe aus (1) und (2), einer hochmolekularen Matrix und
(2) 85 - 38 Gew.-%, bevorzugt 80 - 43 Gew.-%, besonders bevorzugt 75 - 53 Gew.-%, bezogen auf die Summe aus (D und (2), eines in der Matrix durch Nebenvalenzkräfte fest gebundenen flüssigen Dispersionsmittels sowie gegebenenfalls
(3) 0-100 Gew,-%, bezogen auf die Summe aus (1) und (2), an Füll- und/oder Zusatzstoffen, aufgebaut ist, wobei

a) die hochmolekulare Matrix ein kovalent vernetztes Polyurethan und
b) das flüssige Dispersionsmittel eine oder mehrere Polyhydroxyverbindungen mit einem Molekulargewicht zwischen 1000 und 12.000, vorzugsweise zwischen 1700 und 6000, und einer OH-Zahl zwischen 20 und 112, vorzugsweise zwischen 28 und 84, besonders bevorzugt zwischen 30 und 56 ist, wobei das Dispersionsmittel im Wesentlichen keine Hydroxylverbindungen mit einem Molekulargewicht unter 800, vorzugsweise unter 1000 enthält.

Brauchbare, elastische Gele werden erhalten, wenn die aus einer kovalent vernetzten Polyurethanmatrix und einem darin fest (d.h. ohne die Gefahr eines störenden Ausschwitzens) gebundenen Polyols aufgebaut sind, wenn die miteinander reagierenden Isocyanat- bzw. Polyolkomponenten eine gewisse Mindestfunktionalität aufweisen und wenn das Polyol im wesentlichen frei von Anteilen mit einer OH-Zahl von mehr als 112 bzw. einem Molekulargewicht unterhalb von 1000 ist. Dabei wird als Polyisocyanat auch triomerisiertes HDI genannt. Die Gele können überraschenderweise durch direkte Umsetzung von Polyisocyanaten mit den genannten höhermolekularen Polyhydroxyverbindungen in einem Isocyanatkennzahlbereich von ca. 15 bis 60, vorzugsweise 20 bis 55, besonders bevorzugt 25 bis 45, hergestellt werden, sofern die polyurethanbildenden Komponenten (Isocyanat und Hydroxylverbindung) zusammen polyfunktionell sind.

Der Erfindung liegt die Aufgabe zugrunde, Polyurethan-Elastomere auf der Basis von Polyetheralkoholgemischen und trimerisierten Diisocyanaten mit niedriger, einstellbarer Härte zur Verfügung zu stellen, die im Wesentlichen amorph, lichtstabil, optisch klar und wasserresistent sind und zusätzlich einen inhärenten Flammschutz und sehr hohe elektrische Isolationswerte aufweisen.

Die Lösung der Aufgabe erfolgt mit Polyurethan-Elastomere auf der Basis von Polyetheralkoholgemischen (A) und trimerisierten Diisocyanaten (B), herstellbar durch Umsetzung von

-    (A1) einem Gemisch aus di- und trifunktionellen Polyetheralkoholen der Hydroxylfunktionalität 2 bis 3 und Äquivalentgewichten von 500 bis 6000,
-    (A2) einem oder mehreren hydroxylfunktionellen Kettenverlängerer der Funktionalität 2 mit einer Molmasse von 62 bis 260 und mindestens einer Verzweigung mit 1 bis 18 C-Atomen im Molekül,

mit

- (B) einem oder mehreren symmetrisch oder asymmetrisch trimerisierten aliphatischen und/oder cycloaliphatischen Diisocyanaten,
wobei der Isocyanat-Index zwischen 50 und 125 liegt,
in Gegenwart von
- (A3) einem oder mehreren metallorganischen Katalysatoren, die an nanoskalige Metalloxide oder Metallhydroxide oder Metalloxidhydroxide der 2. bis 4. Hauptgruppe und der 4. Nebengruppe des Periodensystems der Elemente adsorbiert sind,
und einem Verfahren zur Herstellung von Polyurethan-Elastomere auf der Basis von Polyetheralkoholgemischen und trimerisierten Diisocyanaten
das dadurch gekennzeichnet ist, dass miteinander umgesetzt werden
- ein Gemisch aus di- und trifunktionellen Polyetheralkoholen (A1) der Hydroxylfunktionalität 2 bis 3 und Äquivalentgewichten von 500 bis 6000,
- ein oder mehrere hydroxylfunktionelle Kettenverlängerer (A2) der Funktionalität 2 mit einer Molmasse von 62 bis 260 und mindestens einer Verzweigung mit 1 bis 18 C-Atomen im Molekül,
- ein oder mehrere symmetrisch oder asymmetrisch trimerisierte aliphatische und/oder cycloaliphatische Diisocyanate (B), wobei der Isocyanat-Index zwischen 50 und 125 liegt,
in Gegenwart von
- einem oder mehreren-metallorganischen Katalysatoren (A3), die an nanoskalige Metalloxide oder Metallhydroxide oder Metalloxidhydroxide der 2. bis 4. Hauptgruppe und der 4. Nebengruppe des Periodensystems der Elemente adsorbiert sind, z.B. Aluminiumoxid, Aluminiumhydroxid, Magnesiumoxid, Magnesiumhydroxid, Aluminiumoxidhydroxid (z. B. Boehmit), Silciumdioxid (pyrogene Kieselsäure), nanoskaliges Titandioxid und Aluminium-Indium-, Mischoxid.

Vorteilhafte Weiterbildungen sind in den Unteransprüchen angegeben.

Danach werden als Kettenverlängerer (A2) Dipropylenglykol und 2-Ethyl-1,3-hexandiol eingesetzt.

In einer Ausgestaltung werden als Isocyanatkomponente (B) symmetrisch trimerisiertes Hexamethylendiisocyanat und/oder asymmetrisch trimerisiertes Hexamethylendiisocyanat mit der A-Komponente umgesetzt.

Eine weitere vorteilhafte Weiterbildung sieht vor als Katalysatoren (A3) an Aluminiumoxid adsorbierte zinnorganische Verbindungen, an Aluminiumoxid adsorbierte Zinn-II-carboxylate, Aluminiumoxidhydroxid adsorbierte Dialkylzinn-IV-carboxylate und/oder an Aluminiumoxidhydroxid adsorbierte Dialkylzinn-IV-bis(thioglykolsäureester) zu verwenden.

In einer weiteren vorteilhaften Ausgestaltung der Erfindung werden Zusatzstoffe (A4) wie Öle, Siliconöle, Silöxanfluide, Pigmente, Farbstoffe, Flammschutzmittel, Graphen, POSS, nanoskaliges, flächiges Graphit, Siliciumnitrid, Bornitrid eingesetzt, um die Eigenschaften des Materials für verschiedene Anwendungen möglich zu machen bzw. zusätzlich zu verbessern. Das betrifft insbesondere die Materialeigenschaften wie amorph, lichtstabil, optisch klar und wasserresistent sowie zusätzlich einen inhärenten Flammschutz und sehr hohe elektrische Isolationswerte.

Die Vernetzung sowohl im Hart- als auch im Weichsegment führt dazu, dass sich die Strukturelemente in diesen nicht derart organisieren können, dass geordnete Strukturen, die über Wasserstoffbrückenbindungen oder andere physikalische Bindungen miteinander verbunden sind, in einem nennenswerten Maße ausgebildet werden können. Dadurch sind die gebildeten Polyurethanstrukturen im Wesentlichen amorph, wodurch die besonderen Eigenschaften dieser Materialien erzeugt werden.

Als Polyetheralkohole können alle handelsüblichen verwendet werden, d. h. auf Wasser, Trimethylolpropan oder Glycerin gestartete Polyetheralkohole, die durch anionische oder metallisch-koordinative Polyaddition mit Alkylenoxiden, hier insbesondere Ethylenoxid und Propylenoxid, erhalten werden und deren Molmassen zwischen 1000 bis 6000 liegen. Weiterhin können Polytetramethylenoxide (PTMO, PTHF) der Molmasse 1000 bis 4000, Polybutadiendiole der Molmasse 1000 bis 4000, Polyisobutylendiole der Molmasse 1000 bis 4000, Polyethylenglykole der Molmasse 1000 bis 4000, Polypropylenglykole der Molmasse 1000 bis 4000 oder Polybutylenglykole der Molmasse 1000 bis 4000 verwendet werden. Als Polyethertriole kommen vorzugsweise aus Glycerin oder Trimethylolpropan und Alkylenoxiden durch anionische Polymerisation hergestellte Homopolymerisate oder statistische oder Blockcopolymere, vor allem mit endständigen Ethylenoxidblöcken, in Frage.

Als Kettenverlängerer kommen solche Diole in Frage, die in Molekül mindestens eine Verzweigung an einem Kohlenstoffatom aufweisen und diese Verzweigungskette eins bis 18 Kohlenstoffatome aufweist. Solche Diole sind z. B. Propylen-1,2-diol, Dipropylenglykol, Butan-2,3-diol, Pentan-1,3-diol, Pentan-1,2-diol, 2-Methyl-hexan-1,3-diol, 2-Ethyl-hexan-1,3-diol, 2-Propyl-hexan-1,3-diol, 2-Ethyl-heptan-1,3-diol, 2-Butyl-hexan-1,3-diol, 2-Hexyl-hexan-1,3-diol usw. Besonders bevorzugt wird 2-Ethyl-hexan-1,3-diol allein oder im Gemisch mit einer weiteren Verbindung, z. B. Dipropylenglykol.

Als Diisocyanate werden vorzugsweise Hexamethylendiisocyanat (HDI), Isophorondiisocyanat (IPDI), 4,4'-Dicyclohexylmethandiisocyanat (HHMDI), 1,4-Tetramethylendiisocyanat oder Gemische davon verwendet. Diese Diisocyanate werden vor der Verwendung in Gegenwart von Katalysatoren, z. B. Tributylphosphin symmetrisch trimerisiert, so dass sie einen Isocyanurat-Ring (Hexahydro-1,3,5-triazin-trion) enthalten wird, oder die Diisocyanate werden in Gegenwart von Katalysatoren asymmetrisch trimerisiert, so dass Iminooxadiazindiongruppen gebildet werden, z. B. in Gegenwart von Tetrabutylphosphoniumhydrogendifluorid, N,N,N-TrimethylN-benzylammoniumfluorid, Tetra-n-butylammoniumfluorid usw. Solche symmetrisch oder asymmetrisch trimerisierte Diisocyanate auf Basis HDI sind kommerziell erhältlich, z. B. Desmodur N3300 oder Desmodur N3900. Trimerisierte Diisocyanate dieser Art enthalten üblicherweise geringe Mengen monomerer Diisocyanate und einen bestimmten Anteil höhermolekularer Trimerisate oder Polymerisate. Diese Diisocyanate weisen eine inhärente UV-Stabilität auf, so dass die daraus hergestellten Polyurethane ebenfalls diese Eigenschaft aufweisen, wenn die spezielle Kombination der Polyetheralkohole und Kettenverlängerer gemäß der Erfindung eingesetzt wird.

Weiterhin enthalten die erfindungsgemäßen Elastomere Katalysatoren, die bisher nicht bekannt sind. Es wurde gefunden, dass einige in der Polyurethan-Chemie bekannte metallorganische Katalysatoren an nanoskalige Metalloxide oder Metalloxidhydroxide adsorbiert werden können. Dadurch bleibt die katalytische Aktivität erhalten, die nanoskaligen Additive verändern jedoch die Eigenschaften der Elastomere, diese bleiben jedoch optisch klar. Als metallorganische Katalysatoren werden insbesondere zinn-, wismut- oder bleiorganische Verbindungen verwendet, hier vor allem Metallcarboxylate, wobei die verwendeten organischen Säuren 6 bis 22 Kohlenstoffatome aufweisen können, oder Thiocarbonsäuren bzw. deren Ester, vor allem auf der Basis der Thioglykolsäure. Besonders geeignet sind Dibutylzinndilaurat, Dibutylzinndiacetat, Dioctylzinn-bis-(thioglykolsäure-2-ethylhexyl-ester), Dibutylzinn- bis-(thioglykolsäure-2-ethylhexyl-ester), Dibutylzinnmischcarboxylate mit 12 bis 18 C-Atomen in der Carbonsäure, Wismuttricarboxylate mit 12 bis 18 C-Atomen in der Carbonsäure, Wismutpentacarboxylate mit 12 bis 18 C-Atomen in der Carbonsäure usw. Zusätzlich können metallorganische Carboxylate des zweiwertigen Zinns wie Zinndioctoat eingesetzt werden.

Als Metalloxide oder Metalloxidhydroxide kommen in Betracht vorzugsweise die des Aluminiums, Magnesiums, Zinks, Titans, Indiums oder Gemischen davon als synthetische oder natürliche Materialien, unter letzteren z. B. Boehmit.

Die Herstellung der erfindungsgemäßen Elastomere erfolgt in Zwei-Komponenten-Technik, bei der die Komponenten (A1), (A2) und (A3) und ggf. (A4) vorgemischt und anschließend mittels Mischmaschine (Hochdruck- oder Niederdruckmischmnaschinen) oder im manuellen Verfahren (Handmischtechnik mittels hochtourigem Rührer, Beutelmischtechnik) verarbeitet werden.

Bei der Herstellung werden die Komponenten (A1, A2, A3, ggf. A4) vorzugsweise vorgemischt und mit dem betreffenden trimerisierten Diisocyanat (B) mit Isocyanat-Indices zwischen 50 und 125 verarbeitet. Der Isocyanat-Index ist definiert als der Quotient aus der Menge der Isocyanat -Äquivalente und der Hydroxyl -Äquivalente multipliziert mit 100:

$$\text{NCO-Index} = \frac{\text{Isocyanat-Äquivalente}}{\text{Hydroxyl-Äquivalente}} \times 100$$

Über drei Variablen werden die Härte und weitere Eigenschaften eingestellt:

(i) über die mittlere Funktionalität der Hydroxylkomponenten (A1, A2),

(ii) über die Kettenlänge der Hydroxylkomponenten (A1, A2) und

(iii) über den Isocyanat-Index (B).

Bei ansteigender mittlerer Hydroxylfunktionalität des Polyetheralkoholgemisches wird die Härte erhöht, jedoch die Dehnbarkeit der Elastomere verringert. Mit steigender Kettenlänge der Polyetheralkohole des Gemisches verringert sich die Härte und die Dehnbarkeit sinkt. Mit abnehmendem Isocyanat-Index kann die Härte bis auf eine Shore-00-Härte von 0 reduziert werden und trotzdem die elastischen Eigenschaften erhalten bleiben. Das Verhältnis des Kettenverlängerers zu dem/den Polyetheralkohol(en) ist dabei ein weiteres Mittel zur Einstellung der Härte. Bei niedrigem molaren Verhältnis des Kettenverlängerers zum Polyetheralkohol, z. B. 0,5 : 1, wird eine niedrige Härte, mitzunehmendem Verhältnis, z. B. 2,5 : 1, eine höhere Härte eingestellt.

Mit der erfindungsgemäßen Zusammensetzung werden Elastomere hergestellt, die sich durch folgende vorteilhafte Eigenschaften auszeichnen:

(i) Shore-00-Härte 0 bis 90

(ii) Shore-A-Härte 0 bis 80

(iii) optisch klar (transparent)

(iv) verbesserter Flammschutz (im Vergleich zu den bisher bekannten Elastomeren steigt der LOI-Wert von 18,5 auf bis zu 26)

(v) verbesserte elektrische Isolationseigenschaften, gemessen an der Durchschlagspannung, die zwischen 20 und 160 kV/mm liegt (zum Vergleich haben die bisher bekannten Produkte eine Durchschlagspannung zwischen 10 und 30 kV/mm und vergleichbare Silikongele oder Silikonelastomere Werte von 15 bis 50 kV/mm)

Die erfindungsgemäßen Elastomere bieten demzufolge wesentliche Eigenschaftsvorteile gegenüber den bisher bekannten Produkten.

Weitere Zusatzstoffe (A4) sind z. B. Öle, Siliconöle, Siloxanfluide, Pigmente, Farbstoffe, Flammschutzmittel, Graphen, POSS, nanoskaliges, flächiges Graphit, Siliciumnitrid, Bornitrid etc.

Die folgenden Beispiele erläutern einige Aspekte der Erfindung, ohne deren Umfang einzugrenzen.

**Ausführungsbeispiele**

Es werden folgende Komponenten eingesetzt:

Polyetherdiol (A1): Molmasse 2000 basierend auf Propylenoxid

Polyetherdiol (A1): Molomasse 3900 basierend auf Propylenoxid mit 27 % Ethylenoxid Endblock

Polyethertriol (A1): Starter Glycerin, Molmasse 3000 basierend auf Propylenoxid

Polyethertriol (A1): Starter Glycerin, Molmasse 5 000 basierend auf Propylenoxid mit 14 % Ethylenoxid Endblock

Polybutadiendiol (A2) Diol mit Molmasse 2000

Die Herstellung eines erfindungsgemäßen Katalysators (A3) wird am Beispiel von Katalysator H beschrieben:

In 100 ml trockenem Dioxan werden 5 g synthetisches Boehmit (Pural® SB der Sasol Deutschland GmbH) dispergiert und unter Rühren auf 40°C erwärmt. Es wird bei dieser Temperatur mit zunächst 300 min$^{-1}$ und dann ansteigend bis auf 1500 min$^{-1}$ gerührt. Nach zwei Stunden Rühren werden zu der Suspension 1,77 g Dibutylzinn- bis-(thioglykolsäure-2-ethylhexyl-ester) zugesetzt und weitere drei Stunden gerührt. Danach wird das Lösungsmittel bei 40°C zunächst bei 100 mbar, danach bei 0,1 mbar entfernt. Der trockene Katalysator wird in dieser Form verwendet.

Analog werden die auch die folgenden Katalysatoren (A3) hergestellt:

Katalysator K aus 5,5 g Aluminiumoxid (ALU C der Evonik AG) und 2,05 g Dibutylzinndilaurat

Katalysator M aus 5,25 g Titandioxid (Aerosil TiO$_2$ T90 der Evonik AG) und Zinndioctoat

Katalysator N aus 4,65 g Magnesiumhydroxid (Teilchengrößenmaximum 12 nm) und 1,95 g Dioctylzinndicarboxylat (PC CAT® T 130), jedoch bei 50°C gerührt.

Katalysator O aus 4,45 g Siliciumdioxid (Aerosil 380 der EVONIK AG) und 1,85 g Dioctylzinndimercaptid (PC CAT® T16)

Katalysator P aus 6,35 g Indium-Zink-Mischoxid (VP ITO IR8 der EVONIK AG) und 1,95 g Dibutylzinndicarboxylat (PC CAT® T 125), jedoch bei 58°C gerührt.

Beispiel 1

Aus den folgenden Komponenten (A1, A2, A3) wird durch Mischung mittels eines Flügelrührers mit 300 min$^{-1}$ innerhalb von 180 min ein A-Komponente hergestellt:

| Polyetherdiol (A1) | 62,54 Teile |
|---|---|
| Polyethertriol (A1) | 5,28 Teile |
| Dipropylenglykol (A2) | 2,14 Teile |
| Katalysator H (A3) | 1,34 Teile |
| Die Komponente (A) wird mit der Komponente (B) | |
| Desmodur® N 3300 | 18,0 g |
| Isocyanat-Index: 97 | |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 0, das sich allen Geometrien sehr gut anpasst.

Durchschlagspannung: 56 kV/mm

LOI: 21,7

Beispiel 2

Aus den folgenden Komponenten (A1, A2, A3) wird durch Mischung mittels eines Flügelrührers mit 300 min$^{-1}$ innerhalb von 180 min eine A-Komponente hergestellt:

| Polyetherdiol (A1) | 92,00 Teile |
|---|---|
| Polyethertriol A1 | 2,03 Teile |
| Dipropylenglykol (A2) | 2,37 Teile |
| Katalysator M (A3) | 3,60 Teile |

Diese Komponente wird mit der B-Komponente

| Desmodur® N 3300 | 31,0 g |
|---|---|
| Isocyanat-Index: | 125 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-A-Härte 39, das sich allen Geometrien sehr gut anpasst.
Durchschlagspannung: 106 kV/mm
LOI: 22,4

Beispiel 3

Aus den folgenden Komponenten (A1, A2, A3) wird durch Mischung mittels eines Flügelrührers mit 300 min$^{-1}$ innerhalb von 180 min eine A-Komponente hergestellt:

| Polyetherdiol (A1) | 91,30 Teile |
|---|---|
| Polyethertriol (A1) | 3,00 Teile |
| Dipropylenglykol (A2) | 2,77 Teile |
| Katalysator M (A3) | 2,93 Teile |
| Diese Komponente (A) wird mit der Komponente (B) | |
| Desmodur® N 3300 | 25,8 g |
| Isocyanat-Index: | 100 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 70, das sich allen Geometrien sehr gut anpasst.

Durchschlagspannung: 62 kV/mm

LOI: 21,4

Beispiel 4

Aus den folgenden Komponenten (A1, A2, A3) wird durch Mischung mittels eines Flügelrührers mit 300 min$^{-1}$ innerhalb von 180 min eine A-Komponente hergestellt:

| | |
|---|---|
| Polyetherdiol (A1) | 88,50 Teile |
| Polyethertriol (A1) | 4,30 Teile |
| Dipropylenglykol (A2) | 2,75 Teile |
| Katalysator H (A3) | 4,45 Teile |

Diese Komponente wird mit der B-Komponente

| | |
|---|---|
| Desmodur® N 3300 | 25,3 g |
| Isocyanat-Index: | 100 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 0, das sich allen Geometrien sehr gut anpasst.

Durchschlagspannung: 106 kV/mm

LOI: 20,8

Beispiel 5

Aus den folgenden Komponenten (A1, A2, A3) wird durch Mischung mittels eines Flügelrührers mit 300 min$^{-1}$ innerhalb von 180 min eine A-Komponente hergestellt:

| | |
|---|---|
| Polyetherdiol (A1) | 91,35 Teile |
| Polyethertriol (A1) | 2,30 Teile |
| Dipropylenglykol (A2) | 2,75 Teile |
| Katalysator M (A3) | 3,60 Teile |

Diese Komponente wird mit der B-Komponente

| | |
|---|---|
| Desmodur® N 3300 | 25,2 g |
| Isocyanat-Index: | 100 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 0, das sich allen Geometrien sehr gut anpasst.

Durchschlagspannung: 58 kV/mm

LOI: 21,4

Beispiel 6

Aus den folgenden Komponenten (A1, A2, A3) wird durch Mischung mittels eines Flügelrührers mit 300 min$^{-1}$ innerhalb von 180 min eine A-Komponente hergestellt:

| | |
|---|---|
| Polyetherdiol (A1) | 91,30 Teile |
| Polyethertriol (A1) | 1,65 Teile |
| 2-Ethyl-1,3-hexandiol (A2) | 2,70 Teile |
| Katalysator K (A3) | 4,35 Teile |

Diese Komponente wird mit der B-Komponente

| | |
|---|---|
| Desmodur® N 3900 | 24,5 g |
| Isocyanat-Index: | 100 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 60, das sich allen Geometrien sehr gut anpasst.

Durchschlagspannung: 72 kV/mm

LOI: 21,6

Beispiel 7

Aus den folgenden Komponenten (A1, A2, A3) wird durch Mischung mittels eines Flügelrührers mit 300 min$^{-1}$ innerhalb von 180 min eine A-Komponente hergestellt:

| | |
|---|---|
| Polyetherdiol (A1) | 91,00 Teile |
| Polyethertriol (A1) | 2,05 Teile |
| 2-Ethyl-1,3-hexandiol (A2) | 2,70 Teile |
| Katalysator K (A3) | 4,25 Teile |
| Diese Komponente wird mit der B-Komponente | |
| Desmodur® N 3900 | 26,05 g |
| Isocyanat-Index: | 106 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 60, das sich allen Geometrien sehr gut anpasst.

Durchschlagspannung: 79 kV/mm

LOI: 21,8

Beispiel 8

Aus den folgenden Komponenten (A1, A2, A3) wird durch Mischung mittels eines Flügelrührers mit 300 min$^{-1}$ innerhalb von 180 min eine A-Komponente hergestellt:

| | |
|---|---|
| Polyetherdiol (A1) | 91,30 Teile |
| Polyethertriol (A1) | 1,65 Teile |
| 2-Ethyl-1,3-hexandiol (A2) | 2,70 Teile |
| Katalysator K (A3) | 4,35 Teile |

Diese Komponente wird mit der B-Komponente

| | |
|---|---|
| Desmodur® N 3900 | 14,55 g |
| Isocyanat-Index: | 60 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 60, das sich allen Geometrien sehr gut anpasst.

Durchschlagspannung: 49 kV/mm

LOI: 21,1

Beispiel 9

Aus den folgenden Komponenten (A1, A2, A3) wird durch Mischung mittels eines Flügelrührers mit 300 min$^{-1}$ innerhalb von 180 min eine A-Komponente hergestellt:

| | |
|---|---|
| Polyetherdiol (A1) | 85,00 Teile |
| Polyethertriol (A1) | 1,65 Teile |
| 2-Ethyl-1,3-hexandiol (A2) | 10,30 Teile |
| Katalysator K (A3) | 3,05 Teile |

Diese Komponente wird mit der B-Komponente

| | |
|---|---|
| Desmodur® N 3900 | 34,7 g |
| Isocyanat-Index: | 80 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 60, das sich allen Geometrien sehr gut anpasst.
Durchschlagspannung: 55 kV/mm
LOI: 21,1

Beispiel 10

Aus den folgenden Komponenten (A1, A2, A3) wird durch Mischung mittels eines Flügelrührers mit 300 min$^{-1}$ innerhalb von 180 min ein A-Komponente hergestellt:

| | |
|---|---|
| Polyetherdiol (A1) | 62,54 Teile |
| Polyethertriol (A1) | 5,28 Teile |
| Dipropylenglykol (A2) | 2,00 Teile |
| Monoethylenglykol (A2) | 0,14 Teile |
| Katalysator P (A3) | 1,55 Teile |

Die Komponente (A) wird mit der Komponente (B)

| | |
|---|---|
| Desmodur® N 3300 | 18,9 g |
| Isocyanat-Index: 98 | |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 12, das sich allen Geometrien sehr gut anpasst.
Durchschlagspannung: 60 kV/mm
LOI: 22,1
UV-Beständeigkeit nach beschleunigter Alterung in einer Klimakammer (Sonnensimulationssystem von Hönle) mit 48h, 2000 Watt, 60cm Entfernung, 90°C, 60% Luftfeuchtigkeit: keine Veränderung.

Beispiel 11

Aus den folgenden Komponenten (A1, A2, A3) wird durch Mischung mittels eines Flügelrührers mit 300 min$^{-1}$ innerhalb von 180 min ein A-Komponente hergestellt:

| | |
|---|---|
| Polyetherdiol (A1) | 62,54 Teile |
| Polyethertriol (A1) | 5,28 Teile |
| Dipropylenglykol (A2) | 2,00 Teile |
| Monoethylenglykol (A2) | 0,17 Teile |
| Katalysator O (A3) | 1,75 Teile |

Die Komponente (A) wird mit der Komponente (B)

| Desmodur® N 3300 | 19,9 g |
|---|---|
| Isocyanat-Index: | 98 |

unter Rühren mit einem Scheibenrührer bei 300 min⁻¹ 10 Minuten gemischt und zu einer 4 mm Platte in einer PTFE-Form vergossen. Man erhält ein optisch klares Elastomer der Shore-00-Härte 21, das sich allen Geometrien sehr gut anpasst.

Durchschlagspannung: 61 kV/mm

LOI: 22,0

UV-Beständeigkeit nach beschleunigter Alterung in einer Klimakammer (Sonnensimulationssystem von Hönle) mit 48h, 2000 Watt, 60cm Entfernung, 90°C, 60% Luftfeuchtigkeit: keine Veränderung.

Beispiel 12

Aus den folgenden Komponenten (A1, A2, A3) wird durch Mischung mittels eines Flügelrührers mit 300 min⁻¹ innerhalb von 180 min ein A-Komponente hergestellt:

| Polyetherdiol (A1) | 62,54 Teile |
|---|---|
| Polyethertriol (A1) | 5,28 Teile |
| Dipropylenglykol (A2) | 2,00 Teile |
| Monoethylenglykol (A2) | 0,25 Teile |
| Katalysator N (A3) | 1,80 Teile |

Die Komponente (A) wird mit der Komponente (B)

| Desmodur® N 3300 | 16,0 g |
|---|---|
| Desmodur® N3900 | 3,0 g |
| Isocyanat-Index: | 99 |

unter Rühren mit einem Scheibenrührer bei 300 min⁻¹ 10 Minuten gemischt und zu einer 4 mm Platte in einer PTFE-Form vergossen. Man erhält ein optisch klares Elastomer der Shore-00-Härte 12, das sich allen Geometrien sehr gut anpasst.

Durchschlagspannung: 57 kV/mm

LOI: 22,2

UV-Beständeigkeit nach beschleunigter Alterung in einer Klimakammer (Sonnensimulationssystem von Hönle) mit 48h, 2000 Watt, 60cm Entfernung, 90°C, 60% Luftfeuchtigkeit: keine Veränderung.

Beispiel 13

Aus den folgenden Komponenten (A1, A2, A3) wird durch Mischung mittels eines Flügelrührers mit 300 min⁻¹ innerhalb von 180 min ein A-Komponente hergestellt:

| Polyetherdiol (A1) | 62,54 Teile |
|---|---|
| Polyethertriol (A1) | 5,28 Teile |
| Dipropylenglykol (A2) | 2,00 Teile |
| Monoethylenglykol (A2) | 0,14 Teile |
| Katalysator P (A3) | 1,55 Teile |
| Nanoskaliges Graphit (A4) | 0,33 Teile |

Die Komponente (A) wird mit der Komponente (B)

| Desmodur® N 3300 | 17,0 g |
|---|---|
| Desmodur® N 3900 | 3,5 g |
| Isocyanat-Index: | 99 |

unter Rühren mit einem Scheibenrührer bei 300 min$^{-1}$ 10 Minuten gemischt und zu einer 4 mm Platte in einer PTFE-Form vergossen. Man erhält ein optisch klares Elastomer der Shore-00-Härte 12, das sich allen Geometrien sehr gut anpasst.

Durchschlagspannung: 52 kV/mm

LOI: 22,7

UV-Beständeigkeit nach beschleunigter Alterung in einer Klimakammer (Sonnensimulationssystem von Hönle) mit 48h, 2000 Watt, 60cm Entfernung, 90°C, 60% Luftfeuchtigkeit: keine Veränderung.

## Patentansprüche

1. Polyurethan-Elastomere auf der Basis von Polyetheralkoholgemischen (A) und trimerisierten Diisocyanaten (B) herstellbar durch Umsetzung von

   - A1 einem Gemisch aus di- und trifunktionellen Polyetheralkoholen der Hydroxylfunktionalität 2 bis 3 und Äquivalentgewichten von 500 bis 6000,
   - A2 einem oder mehreren hydroxylfunktionellen Kettenverlängerer der Funktionalität 2 mit einer Molmasse von 62 bis 260 und mindestens einer Verzweigung mit 1 bis 18 C-Atomen im Molekül, mit
   - B einem oder mehreren symmetrisch oder asymmetrisch trimerisierten aliphatischen und/oder cycloaliphatischen Diisocyanaten,

   wobei der Isocyanat-Index zwischen 50 und 125 liegt,

   in Gegenwart von

   - A3 einem oder mehreren metallorganischen Katalysatoren, die an nanoskalige Metalloxide oder Metallhydroxide oder Metalloxidhydroxide der 2. bis 4. Hauptgruppe und der 4. Nebengruppe des Periodensystems der Elemente adsorbiert sind.

2. Polyurethan-Elastomere nach Anspruch 1,
   **dadurch gekennzeichnet, dass**
   als Kettenverlängerer (A2) Dipropylenglykol eingesetzt wird.

3. Polyurethan-Elastomere nach Anspruch 1 oder 2,
   **dadurch gekennzeichnet, dass**
   als Kettenverlängerer (A2) 2-Ethyl-1,3-hexandiol eingesetzt wird.

4. Polyurethan-Elastomere nach Anspruch 1 oder 2,
   **dadurch gekennzeichnet, dass**
   als Kettenverlängerer (A2) Gemische von Diolen eingesetzt werden.

5. Polyurethan-Elastomere nach einem der Ansprüche 1 bis 4,
   **dadurch gekennzeichnet, dass**
   als Isocyanatkomponente (B) symmetrisch trimerisiertes Hexamethylendiisocyanat eingesetzt wird.

6. Polyurethan-Elastomere nach einem der Ansprüche 1 bis 5,
   **dadurch gekennzeichnet, dass**
   als Isocyanatkomponente (B) asymmetrisch trimerisiertes Hexamethylendiisocyanat eingesetzt wird.

7. Polyurethan-Elastomere nach einem der Ansprüche 1 bis 6,
   **dadurch gekennzeichnet, dass**
   Katalysatoren (A3) an Aluminiumoxid adsorbierte zinnorganische Verbindungen eingesetzt werden.

8. Polyurethan-Elastomere nach einem der Ansprüche 1 bis 6,
   **dadurch gekennzeichnet, dass**
   Katalysatoren (A3) an Aluminiumoxid adsorbierte Zinn-II-carboxylate eingesetzt werden.

9. Polyurethan-Elastomere nach einem der Ansprüche 1 bis 6,
   **dadurch gekennzeichnet, dass**
   Katalysatoren (A3) an Aluminiumoxidhydroxid adsorbierte Dialkylzinn-IV-carboxylate eingesetzt werden.

**10.** Polyurethan-Elastomere nach einem der Ansprüche 1 bis 6,
**dadurch gekennzeichnet, dass**
Katalysatoren (A3) an Aluminiumoxidhydroxid adsorbierte Dialkylzinn-IV-bis(thioglykolsäureester) eingesetzt werden.

**11.** Polyurethan-Elastomere nach einem der Ansprüche 1 bis 10,
**dadurch gekennzeichnet, dass**
weitere Zusatzstoffe (A4) wie Öle, Siliconöle, Siloxanfluide, Pigmente, Farbstoffe, Flammschutzmittel, Graphen, Polyhedral oligomeric silsesquioxane (POSS), Doppelschicht-Metallhydroxide, nanoskaliges flächiges Graphit, Siliciumnitrid, Bornitrid eingesetzt werden.

**12.** Verfahren zur Herstellung von Polyurethan-Elastomere auf der Basis von Polyetheralkoholgemischen und trimerisierten Diisocyanaten,
**dadurch gekennzeichnet, dass**
miteinander umgesetzt werden

- ein Gemisch aus di- und trifunktionellen Polyetheralkoholen (A1) der Hydroxylfunktionalität 2 bis 3 und Äquivalentgewichten von 500 bis 6000,
- ein oder mehrere hydroxylfunktionelle Kettenverlängerer (A2) der Funktionalität 2 mit einer Molmasse von 62 bis 260 und mindestens einer Verzweigung mit 1 bis 18 C-Atomen im Molekül,
- ein oder mehrere symmetrisch oder asymmetrisch trimerisierte aliphatische und/oder cycloaliphatische Diisocyanate (B),

in Gegenwart von

- einem oder mehreren-metallorganischen Katalysatoren (A3), die an nanoskalige Metalloxide oder Metallhydroxide oder Metalloxidhydroxide der 2. bis 4. Hauptgruppe und der 4. Nebengruppe des Periodensystems der Elemente adsorbiert sind.

**13.** Verfahren nach Anspruch 12,
**dadurch gekennzeichnet, dass**
als Kettenverlängerer (A2) Dipropylenglykol eingesetzt wird.

**14.** Verfahren nach Anspruch 12 oder 13,
**dadurch gekennzeichnet, dass**
als Kettenverlängerer (A2) 2-Ethyl-1,3-hexandiol eingesetzt wird.

**15.** Verfahren nach einem der Ansprüche 12 bis 14,
**dadurch gekennzeichnet, dass**
als Isocyanatkomponente (B) symmetrisch trimerisiertes Hexamethylendiisocyanat eingesetzt wird.

**16.** Verfahren nach einem der Ansprüche 12 bis 15,
**dadurch gekennzeichnet, dass**
als Isocyanatkomponente (B) asymmetrisch trimerisiertes Hexamethylendiisocyanat eingesetzt wird.

**17.** Verfahren nach einem der Ansprüche 12 bis 16,
**dadurch gekennzeichnet, dass**
Katalysatoren (A3) an Aluminiumoxid adsorbierte zinnorganische Verbindungen eingesetzt werden.

**18.** Verfahren nach einem der Ansprüche 12 bis 16,
**dadurch gekennzeichnet, dass**
Katalysatoren (A3) an Aluminiumoxid adsorbierte Zinn-II-carboxylate eingesetzt werden.

**19.** Verfahren nach einem der Ansprüche 12 bis 16,
**dadurch gekennzeichnet, dass** Katalysatoren (A3) an Aluminiumoxidhydroxid adsorbierte Dialkylzinn-IV-carboxylate eingesetzt werden.

**20.** Verfahren nach einem der Ansprüche 12 bis 16,

**dadurch gekennzeichnet, dass**
Katalysatoren (A3) an Aluminiumoxidhydroxid adsorbierte Dialkylzinn-IV-bis(thioglykolsäureester) eingesetzt werden.

21. Verfahren nach einem der Ansprüche 12 bis 20,
**dadurch gekennzeichnet, dass**
weitere Zusatzstoffe (A4) wie Öle, Siliconöle, Siloxanfluide, Pigmente, Farbstoffe, Flammschutzmittel, Graphen, Polyhedral oligomeric silsesquioxane (POSS), Doppelschicht-Metallhydroxide, nanoskaliges flächiges Graphit, Siliciumnitrid, Bornitrid eingesetzt werden.

Europäisches
Patentamt

European
Patent Office

Office européen
des brevets

**EUROPÄISCHER RECHERCHENBERICHT**

Nummer der Anmeldung

EP 14 07 5084

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 119 735 A1 (TESA SE [DE]) 18. November 2009 (2009-11-18) | 1,4,5, 7-11 | INV. C08G18/48 |
| A | * Absätze [0001], [0013], [0032], [0034] - [0041]; Beispiel 1 * | 2,3,6, 12-21 | C08G18/66 C08G18/72 C08G18/79 |
| Y | US 2007/142609 A1 (HARASIN STEPHEN J [US] ET AL) 21. Juni 2007 (2007-06-21) | 1-11 | C08G18/24 C08G18/32 |
| A | * Absätze [0001], [0014] - [0025], [0029] - [0030], [0033] - [0035], [0038], [0055]; Ansprüche; Beispiel 1 * | 12-21 | |
| Y | WO 2008/025470 A1 (BAYER MATERIALSCIENCE AG [DE]; EMMRICH EVA [DE]; BRECHT KLAUS [DE]; PF) 6. März 2008 (2008-03-06) * Seite 1, Absatz 4-6 * * Seite 2, Zeilen 1-22 * * Seite 3, Zeile 19; Ansprüche; Beispiele * | 1-21 | |
| Y | US 4 507 410 A (FALARDEAU EDWARD R [US] ET AL) 26. März 1985 (1985-03-26) | 12-21 | |
| A | * Spalte 1, Zeilen 5-9 * * Spalte 2, Zeilen 24-27, 37-57; Beispiel 7 * | 1-11 | RECHERCHIERTE SACHGEBIETE (IPC) C08G |
| Y | GB 927 004 A (UNION CARBIDE CORP) 22. Mai 1963 (1963-05-22) * Seite 1, Zeilen 12-18 * * Seite 1, Zeile 86 - Seite 2, Zeile 4 * * Seite 15, Zeilen 58-103 * * Seite 23, Zeilen 3-4, 15-17, 33-30, 60-76 * | 12-21 | |
| Y | DE 20 2008 018346 U1 (GT ELEKTROTECHNISCHE PRODUKTE GMBH [DE]) 14. Februar 2013 (2013-02-14) | 1-11 | |
| A | * Absätze [0001], [0002], [0007], [00-9], [0015], [0029] * | 12-21 | |

Der vorliegende Recherchenbericht wurde für alle Patentansprüche erstellt

| Recherchenort | Abschlußdatum der Recherche | Prüfer |
|---|---|---|
| München | 21. Mai 2015 | Eigner, Markus |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 14 07 5084

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2015

| Im Recherchenbericht angeführtes Patentdokument | Datum der Veröffentlichung | Mitglied(er) der Patentfamilie | Datum der Veröffentlichung |
|---|---|---|---|
| EP 2119735 A1 | 18-11-2009 | CA 2663310 A1 | 13-11-2009 |
| | | CA 2723916 A1 | 19-11-2009 |
| | | CN 101638467 A | 03-02-2010 |
| | | CN 102089343 A | 08-06-2011 |
| | | DE 102008023252 A1 | 19-11-2009 |
| | | EP 2119735 A1 | 18-11-2009 |
| | | EP 2276784 A1 | 26-01-2011 |
| | | ES 2388048 T3 | 08-10-2012 |
| | | JP 5554774 B2 | 23-07-2014 |
| | | JP 5657215 B2 | 21-01-2015 |
| | | JP 2009275224 A | 26-11-2009 |
| | | JP 2011521040 A | 21-07-2011 |
| | | KR 20090118855 A | 18-11-2009 |
| | | KR 20110016935 A | 18-02-2011 |
| | | PL 2119735 T3 | 30-11-2012 |
| | | TW 201000506 A | 01-01-2010 |
| | | TW 201002749 A | 16-01-2010 |
| | | US 2009286950 A1 | 19-11-2009 |
| | | US 2011237760 A1 | 29-09-2011 |
| | | WO 2009138402 A1 | 19-11-2009 |
| US 2007142609 A1 | 21-06-2007 | BR PI0619834 A2 | 18-10-2011 |
| | | CA 2632979 A1 | 12-07-2007 |
| | | CN 101321794 A | 10-12-2008 |
| | | EP 1963389 A1 | 03-09-2008 |
| | | JP 2009520068 A | 21-05-2009 |
| | | KR 20080080534 A | 04-09-2008 |
| | | US 2007142609 A1 | 21-06-2007 |
| | | WO 2007078727 A1 | 12-07-2007 |
| WO 2008025470 A1 | 06-03-2008 | US 2008071041 A1 | 20-03-2008 |
| | | WO 2008025470 A1 | 06-03-2008 |
| US 4507410 A | 26-03-1985 | KEINE | |
| GB 927004 A | 22-05-1963 | BE 600778 A1 | 03-07-1961 |
| | | GB 927004 A | 22-05-1963 |
| | | NL 261966 A | 21-05-2015 |
| DE 202008018346 U1 | 14-02-2013 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 6780957 B
- US 6562932 B
- US 6242555 B
- US 3945981 A
- DE 3103564